Europäisches Patentamt

European Patent Office

Office européen des brevets

(19)

(11) Veröffentlichungsnummer : **0 048 400 B2**

## NEUE EUROPÄISCHE PATENTSCHRIFT

(12)

(45) Veröffentlichungstag der neuen Patentschrift :
24.07.91 Patentblatt 91/30

(51) Int. Cl.⁵ : **C08L 71/12, C08L 25/00**

(21) Anmeldenummer : 81107118.2

(22) Anmeldetag : 10.09.81

(54) **Thermoplastische Formmassen.**

Die Akte enthält technische Angaben, die nach dem Eingang der Anmeldung eingereicht wurden und die nicht in dieser Patentschrift enthalten sind.

(30) Priorität : 20.09.80 DE 3035560

(43) Veröffentlichungstag der Anmeldung :
31.03.82 Patentblatt 82/13

(45) Bekanntmachung des Hinweises auf die Patenterteilung :
17.04.85 Patentblatt 85/16

(45) Bekanntmachung des Hinweises auf die Entscheidung über den Einspruch :
24.07.91 Patentblatt 91/30

(84) Benannte Vertragsstaaten :
BE DE FR GB IT NL

(56) Entgegenhaltungen :
DE-A- 2 258 896
DE-B- 2 119 301

(56) Entgegenhaltungen :
DE-C- 2 211 005
FR-A- 2 090 643
FR-A- 2 134 399
FR-A- 2 162 154
FR-A- 2 197 042
FR-A- 2 212 378
FR-A- 2 337 173
Journal of Material Science 7, 1443-53 (1972)

(73) Patentinhaber : BASF Aktiengesellschaft
Carl-Bosch-Strasse 38
W-6700 Ludwigshafen (DE)

(72) Erfinder : Brandstetter, Franz, Dr.
Ritterbuechel 45
W-6730 Neustadt (DE)
Erfinder : Echte, Adolf, Dr.
Leuschnerstrasse 42
W-6700 Ludwigshafen (DE)
Erfinder : Gausepohl, Hermann, Dr.
Neuweg 10
W-6704 Mutterstadt (DE)
Erfinder : Naarmann, Herbert, Dr.
Haardtblick 15
W-6719 Wattenheim (DE)

## Beschreibung

Die Erfindung betrifft thermosplastiche Formmassen auf der Grundlage von schlagfest modifizeirten Styrolplymerisaten und Polyphenylenethern.

Thermoplastische Massen, die sich zur Herstellung von Formteilen eignen und die schlagzäh modifizierte Styrolpolymerisate und Polyphenylenether enthalten, sind z. B. aus den US-Patentschriften 3 383 435, 4 128 602 sowie 4 128 603 bekannt. Solche Formmassen eignen sich zur Herstellung von Formteilen, die sich im Vergleich zu schlagzäh modifizierten Styrolpolymerisaten, die nicht mit Polyphenylenethern abgemischt sind, durch eine bessere Wärmeformbeständigkeit auszeichnen. Die Materialeigenshaften derartiger Formmassen sind im allgemeinen zufriedenstellend, doch hat es sich gezeigt, daß die Formmassen eine schlechte Fließfähigkeit und aus den Formmassen hergestellte Formteile nicht ausreichende mechanische Eigenschaften, wie nicht ausreichende Steifigkeit haben.

Der vorliegenden Erfindung lag daher die Aufgabe zugrunde, thermoplastische Formmassen auf der Grundlage von schlagfest modifizierten Styrolpolymerisaten, die durch Polymerisation einer monovinylaromatischen Verbindungen in Gegenwart eines Kautschuks erhalten worden sind, und deren Kautschukanteil zwischen 2 und 20 Gew.-% beträgt, un Polyphenylenethern zu schaffen, die zu Formteilen mit einer verbesserten Materialeigenschaft verarbeitet werden können.

Diese Aufgabe wird erfindungsgemäß gelöst durch Formmassen, die eine Mischung aus zwei modifizierten Styrolpolymerisaten enthalten, wobei die Weichkomponente eines Styrolpolymerisates einen Teilchendurchmesser von 0,2 bis 0,5 μm hat und die Teilchen 95 - 85 Gew.% der Teilchen der Mischung ausmachen und die Weichkomponente des anderen Styrolpolymerisates einen Teilchendurchmesser von 4 bis 7 μm hat und die Teilchen 15 bis 5 Gew.% der Teilchen der Mischung ausmachen und wobei die Teilchen der Weichkomponenten einen mittleren Teilchendurchmesser von größer 1 μm haben.

Unter Formmassen sollen ungeformte Mischungen verstanden werden, die sich durch thermoplastische Verarbeitung innerhalb bestimmter Temperaturbereiche zu Formteilen oder zu Halbzeug verarbeiten lassen. Die Formmassen können als Granulat vorliegen, sie können aber auch pulverförmig oder durch Tablettierung vorgeformt oder in Form von Platten und Bahnen vorliegen.

Zur Herstellung der in den Formmassen enthaltenen schlagfest modifizierten Styrolpolymerisate kann man schlagfest modifizierte Styrolpolymerisate, deren Weichkimponenten unterschiedliche Teilchengrößen haben, in entsprechendem Verhältnis miteinander mischen. So kann man beispielsweise 90 Gewichtsteile eines Polymerisates mit einer mittleren Teilchengröße von 0.5 μm und 10 Gewichtsteilen eines Polymerisates mit einer mittleren Teilchengröße von 6 μm verwenden.

Die thermoplastischen Formmassen können schlagfest modifizierte Styrolpolymerisate und Polyphenylenäther in beliebigen Mengen, beispielsweise in Mengen von 5 bis 90 Gew.-% Styrolpolymerisat und 95 bis 10 Gew.-% Polyphenylenäther enthalten. Für die Herstellung von Formteilen eignen sich insbesondere solche Formmassen, die 20 bis 80 Gew.-% schlagfest modifizierte Styrolpolymerisate und 80 bis 20 Gew.-% Polyphenylenäther enthalten.

Die meist angewandten Verfahren zur Herstellung schlagzäh modifizierter Styrolpolymerisate sind die Polymerisation in Masse oder Lösung, wie es beispielsweise in der US-PS 2694 692 beschrieben ist und Verfahren zur Masse-Suspensionspolymerisation, wie sie beispielsweise in der US-PS 2 862 906 beschrieben sind. Selbstverständlich sind auch andere Verfahren anwendbar, sofern die obengenannte Teilchengrößenkombination eingestellt wird.

Als monovinylaromatische Verbindungen kommen dabei insbesondere Styrol in Betracht, ferner die kern- oder seitenkettenalkylierten Styrole. Vorzugsweise wird jedoch Styrol allein verwendet.

Als Kautschuke werden die üblicherweise für die Schlagfestmodifizierung von Styrolpolymerisaten gebräuchlichen natürlichen oder synthetischen Kautschuke eingesetzt. Geeignete Kautschuke im Sinne der Erfindung sind neben Naturkautschuk z. B. Polybutadien, Polyisopren und Mischpolymerisate, des Butadiens und/oder Isoprens mit Styrol und anderen Comonomeren, die eine Glastemperatur unter -20°C besitzen. Besonders eignen sich Butadien-Polymerisate mit einem 1,4-cis-Gehalt der zwischen 25 und 98 liegt.

Die Herstellung der schlagfest modifizierten Polymerisate mit dem erfindungsgemäßen Eigenschaftsbild geschieht vorzugsweise durch Polymerisation der monovinylaromatischen Verbindungen in Gegenwart des Kautschuks. Die Polymerisation erfolgt, wie erwähnt, dabei in der Regel in an sich bekannter Weise in Masse, Lösung oder wäßriger Dispersion, wobei zunächst der Kautschuk in den polymerisierbaren Monomeren gelöst und diese Ausgangslösung polymerisiert wird.

Bei der Lösungs-Polymerisation können dieser Ausgangslösung noch bis zu maximal 50 Gewichtsprozent, bezogen auf die eingesetzten monovinylaromatischen Verbindungen, eines indifferenten Verdünnungsmittels zugesetzt werden. Als indifferente Verdünnungsmittel sind beispielsweise aromatische Kohlenwasserstoffe oder Gemische von aromatischen Kohlenwasserstoffen geeignet. Bevorzugt werden dabei Toluol, Äthylbenzol, die Xylole oder Gemische dieser Verbindungen.

Bei der Polymerisation in wäßriger Dispersion wird im allgemeinen auf den Zusatz von Lösungsmitteln verzichtet ; eine besonders günstige Ausführungsform besteht darin, die Lösung des Kautschuks in den Monomeren bis zu einem Umsatz von etwa 45% in Masse unter Einwirkung von Scherkräften vorzupolymerisieren, diese Reaktionsmasse dann in Wasser zu suspendieren und anschließend auszupolymerisieren. Im allgemeinen wird dieses Verfahren unter Zugabe öllöslicher, in Radikale zerfallender Initatoren, wie Benzoylperoxid, Dicumylperoxid, Ditert.-butylperoxid, Azo-diisobutyronitril u. ä. oder Kombinationen davon ausgelöst, doch kann die Vorpolymerisation auch thermisch gestartet werden. Als Suspendiermittel dienen bekanntlich wasserlösliche, hochmolekulare Verbindungen wie Methylcellulose, Oxypropylcellulose, Polyvinylalkohol, teilverseifte Polyvinylacetate usw. oder anorganische Dispergiermittel, z. B. von Bariumsulfat. Die Suspendiermittel werden im allgemeinen in Mengen von 0,1 bis 5 Gew.-%, bezogen auf die organische Phase eingesetzt.

Bei der Polymerisation in Masse oder Lösung wird in der Regel in einem Temperaturbereich zwischen 50 und 250°C, vorzugsweise 100 bis 200° C, polymerisiert. Der Polymerisationsansatz muß dabei mindestens im ersten Abschnitt der Polymerisation, d. h. bis zu Umsätzen der monovinylaromatischen Verbindungen gleich oder kleiner 45 Gew.-% gut gerührt werden. Alle diese Polymerisationsverfahren sind hinreichend bekannt und in Einzelheiten in der Literatur beschrieben. Eine zusammenfassende Darstellung findet sich bei Amos, Polym. Engng. Sci., 14 (1974), 1, S. 1 bis 11, sowie in den US-Patentschriften 2 694 692 und 2 862 906 auf die wegen weiterer Einzelheiten verwiesen werden soll.

Unter Weichkomponente im Sinne dieser Erfindung wird der bei Raumtemperatur (25°C) in Toluol unlösliche Anteil des schlagfest modifizierten Polymerisats abzüglich etwaiger Pigmente verstanden. Die Weichkomponente entspricht also dem Gelanteil des Produktes.

Die Weichkomponente ist im allgemeinen heterogen aufgebaut ; sie bildet sich in der Regel imm Laufe des Herstellprozesses aus und wird in der Menge und im Zerteilungsgrad durch die Verfahrensbedingungen beeinflußt. Die zu polymerisierende Lösung des Kautschuks in den monovinylaromatischen Monomeren trennt sich bekanntlich unmittelbar nach Einsetzen der Reaktion in zwei Phasen, von denen die eine, eine Lösung des Kautschuks in monomeren Vinylaromaten, zunächst die kohärente Phase bildet, während die zweite, eine Lösung des Polyvinylaromaten in seinem eigenen Monomeren, in ihr in Tröpfchen suspendiert bleibt. Mit steigendem Umsatz vermehrt sich die Menge der zweiten Phase auf Kosten der ersten und unter Verbrauch der Monomeren ; dabei tritt ein Wechsel der Phasenkohärenz auf. Bei diesem bilden sich Tropfen von Kautschuklösung in Polyvinylaromatlösung aus ; diese Tropfen halten aber ihrerseits kleinere Tropfen der jetzt äußeren Phase eingeschlossen.

Neben diesem Vorgang läuft eine Pfropfreaktion ab, bei der chemische Verknüpfungen zwischen den Kautschukmolekülen und den Polyvinylaromaten unter Bildung von Pfropf-Copolymeren aus beiden Bestandteilen gebildet werden. Dieser Vorgang ist bekannt und z. B. bei Fischer, Die angew. Markom. Chem. 33 (1973), S. 35 bis 74, ausführlich dargestellt.

Sowohl der aufgepfropfte als auch der mechanisch eingeschlossene Anteil des Polyvinylaromaten in den Kautschukteilchen ist zur Weichkomponente zu rechnen.

Wenn die Masse ganz durchpolymerisiert ist, ist so eine in eine harte Matrix aus dem Polyvinylaromaten eingelagerte heterogene Weichkomponente entstanden, die aus gepfropften Kautschukteilchen mit Einschlüssen aus Matrixmaterial (Polyvinylaromat) besteht. Je größer die Menge des eingeschlossenen Matrix-Materials ist, um so größer ist bei konstantem Kautschukgehalt die Menge der Weichkomponente. Diese richtet sich also nicht nur nach der Menge des eingesetzten Kautschuks, sondern auch nach der Prozeßführung besonders vor und während der Phaseninversion. Die Einzelmaßnahmen sind prozeßspezifisch und dem Fachmann bekannt (siehe z. B. Freeguard, Brit. Polym. J. 6 (1974), S. 203 bis 228 ; Wagner, Robeson, Rubber Chem. Techn. 43 (1970), 1129 ff).

Um zu schlagfesten thermoplastischen Formmassen mit den erfindungsgemäßen Eigenschaftsmerkmalen zu gelangen, wird die Menge an Kautschuk, die vor der Polymerisation in den Monomeren unter Herstellung der Ausgangslösung gelöst wird, in Abhängigkeit von dem Endumsatz bei der Polymerisation so gewählt, daß der Weichkomponentengehalt im resultierenden schlagfest modifizierten Polymerisat der monovinylaromatischen Verbindungen mindestens 20 Gew.-%, vorzugsweise 25 Gew.-% und mehr, bezogen auf das schlagfest modifizierte Polymerisat, beträgt. Die Obergrenze des Weichkomponentengehaltes ist durch die Forderung, daß der Polyvinylaromat die kohärente Phase bilden muß, zu etwa 50 bis 60 Gew.-% gegeben. Für die erfindungsgemäßen thermoplastischen Formmassen hat sich dabei ein Weichkomponenten-Gehalt von 25 bis 35 Gewichtsprozent, bezogen auf das schlagfest modifizierte Polymerisat, als besonders günstig erwiesen. Der Kautschuk-Anteil des schlagfest modifizierten Polymerisats beträgt dann im allgemeinen zwischen 2 und 20 Gew.-%, vorzugsweise von 5 bis 15 Gew.-%.

Wie dargelegt und hinreichend bekannt, bestehen die schlagfest modifizierten Polymerisate der monovinylaromatischen Verbindungen aus einer einheitlichen umhüllenden Phase (Matrix) aus dem Polymerisat der monovinylaromatischen Verbindung, in die als disperse Phase die Kautschukteilchen der Weichkomponente eingebettet sind, wobei die Kautschuk-Teilchen partiell vernetzt und in mehr oder weniger starkem Maße während der Polymerisation durch die monovinylaromatischen Verbindungen gepfropft worden sind.

Die Bestimmung der mittleren Teilchengröße der dispersen Weichkomponente kann z. B. durch Auszählung und Auswertung elektronenmikroskopischer Dünnschichtaufnahmen der schlagfest modifizierten Polymerisate erfolgen (vergl. F. Lenz, Zeitschrift für Wiss. Mikroskopie, 63 (1956), S. 50/56).

Die Einstellung der Teilchengröße der dispersen Weichkomponenten-Phase erfolgt dabei in an sich bekannter Weise bei der Polymerisation der monovinylaromatischen Verbindungen durch Anpassen der Rührgeschwindigkeit im ersten Abschnitt der Polymerisation, d. h. bis zu einem Umsatz der Monomeren von gleich oder kleiner als 45%. Dabei ist die Teilchengröße der dispersen Weichkomponenten-Phase um so größer, je kleiner die Rührerdrehzahl und damit je kleiner die Scherbeanspruchung ist. Der Zusammenhang zwischen der Rührgeschwindigkeit und der Größe und Verteilung der Kautschukteilchen im resultierenden schlagfesten Polymerisat ist z. B. in der zitierten Arbeit von Freeguard beschrieben, auf welche hinsichtlich weiterer Einzelheiten verwiesen wird. Die betreffende notwendige Rührgeschwindigkeit zur Erzielung der gewünschten Teilchengröße der dispersen Weichkomponenten-Phase hängt unter anderem von den jeweiligen Apparateverhältnissen ab und ist dem Fachmann bekannt bzw. läßt sich durch ein paar einfache Versuche bestimmen.

Die mittlere Teilchengröße (Gewichtsmittel) der dispersen Weichkomponenten-Phase wurde bestimmt durch Auszählen und Mitteln der zur gleichen Größenklasse (konst. Interwallbreite) gehörigen Teilchen aus elektronenmikroskopischen Dünnschichtaufnahmen. Mit den Volumina der Teilchen (3. Potenz des scheinbaren Durchmessers) innerhalb der Intervalle wird die Verteilungssummenkurve bestimmt. Beim 50%-Ordinatenwert kann auf der Abszisse der Äquivalentdurchmesser dann abgegriffen werden. Die angegebenen mittleren Durchmesser stellen dabei einen Mittelwert von mindestens 5000 Teilchen dar.

Bei den Polyäthern handelt es sich um Verbindungen auf der Basis von in ortho-Position disubstituierten Polyphenylenoxiden, wobei der Äthersauerstoff der einen Einheit an den Benzolkern der benachbarten Einheit gebunden ist. Dabei sollen mindestens 50 Einheiten miteinander verknüpft sein. Die Polyäther können in ortho-Stellung zum Sauerstoff, Wasserstoff, Halogen, Kohlenwasserstoffe, die kein $\alpha$-ständiges tert. Wasserstoffatom besitzen, Halogenkohlenwasserstoffe, Phenylreste und Kohlenwasserstoff-oxi-Reste tragen. So kommen in Frage :

Poly(2,6-dichlor-1,4-phenylen)äther,
Poly(2,6-diphenyl-1,4-phenylen)äther,
Poly(2,6-dimethoxy-1,4-phenylen)äther,
Poly(2,6-dimethyl-1,4-phenylen)äther,
Poly(2,6-dibrom-1,4-phenylen)äther.

Bevorzugterweise wird der Poly(2,6-dimethyl-1,4-phenylen)äther eingesetzt. Besonders bevorzugt sind dabei Poly(2,6-dimethyl-1,4-phenylen)äther mit einer Grenzviskosität von 0,45 bis 0,65 dl/g (gemessen in Chloroform bei 30°C).

Die Polyphenylenäther können z. B. in Gegenwart von komplexbildenden Mitteln wie Kupferbromid und sek.-Dibutylamin aus den Phenolen hergestellt werden.

Die Mischungen aus den schlagzäh modifizierten Styrolpolymerisaten und Polyphenylenäthern können außerdem weitere Zusatzstoffe wie Pigmente, Farbstoffe, Füllstoffe, Flammschutzmittel, weitere verträgliche Polymere, Antistatika, Antioxidantien und Schmiermittel enthalten.

Man stellt die erfindungsgemäßen thermoplastischen Formmassen wie üblich auf Vorrichtungen, die ein homogenes Mischen zulassen, wie Knetern, Extrudern oder Walzenmischgeräten her. Neben der hohen Fließfähigkeit haben die Formmassen weitere gute Eigenschaften, wie hohe Steifigkeit und andere gute mechanische Eigenschaften.

## Patentansprüche

1. Thermoplastische Formmassen auf der Grundlage von schlagfest modifizierten Styrolpolymerisaten, die durch Polymerisation einer monovinylaromatischen Verbindung in Gegenwart eines Kautschuks erhalten worden sind, und deren Kautschukanteil zwischen 2 und 20 Gew.-% beträgt und deren Weichkomponentengehalt mindestens 20 Gew.-% beträgt und Polyphenylenäthern, dadurch gekennzeichnet, daß die Formmassen Mischungen aus zwei modifizierten Styrolpolymerisaten enthalten, wobei die Weichkomponente eines Styrolpolymerisates einen Teilchendurchmesser von 0,2 bis 0,5 µm hat und die Teilchen 95 - 85 Gew.-% der Teilchen der Mischung ausmachen und die Weichkomponente des anderen Styrolpolymerisates einen Teilchendurchmesser von 4 bis 7 µm hat und die Teilchen 15 bis 5 Gew.-% der Teilchen der Mischung ausmachen und wobei die Teilchen der Weichkomponente einen mittleren Teilchendurchmesser von größer 1 µm haben.

2. Thermoplastische Formmassen nach Anspruch 1, dadurch gekennzeichnet, daß der Weichkomponentengehalt, bezogen auf das schlagfest modifizierte Polymerisat, 25 bis 35 Gewichtsprozent beträgt.

## Revendications

1. Masses de moulage thermoplastiques à base de polymères du styrène modifiés dans le sens de la résistance au choc, qui ont été obtenus par polymérisation d'un composé monovinylaromatique en présence d'un caoutchouc et dont la teneur en caoutchouc se situe entre 2 et 20 % en poids, et de polyéthers de phénylène, caractérisées en ce que les masses contiennent un mélange de deux polymères du styrène, modifiés, où le constituant mou d'un polymère du styrène possède un diamètre des particules de 0,2 à 0,5 μm et les particules forment de 95 à 85% en poids des particules du mélange et le constituant mou de l'autre polymère du styrène possède un diamètre des particules de 4 à 7 μm et les particules forment de 15 à 5% des particules du mélange et où les particules des constituants mous possèdent un diamètre moyen des particules supérieur à 1 μm.

2. Masses de moulage thermoplastiques selon la revendication 1, caractérisées en ce que la teneur en constituant mou, par rapport au produit de polymérisation modifié dans le sens de la résistance au choc, est de 25 à 35 % en poids.

**Claims**

1. A thermoplastic molding material based on impact-modified styrene polymers obtained by polymerizing a monovinylaromatic compound in the presence of a rubber, and whose rubber content is from 2 to 20% by weight and whose soft component content is at least 20% by weight, and polyphenylene ethers, wherein the molding material contains a mixture of two modified styrene polymers, the soft component of one styrene polymer having a particle diameter of from 0.2 to 0.5 μm and the particles making up from 95-85% by weight of the particles of the mixture, and the soft component of the other styrene polymer having a particle diameter of from 4 to 7 μm and the particles making up from 15 to 5% by weight of the particles of the mixture, and the particles of the soft component having a mean particle diameter of greater than 1 μm.

2. A thermoplastic molding material as claimed in claim 1, wherein the soft component content, based on the impact-modified polymer, is from 25 to 35 percent by weight.